(19) Europäisches Patentamt

European Patent Office

Office européen des brevets

(11) **EP 1 335 515 A2**

(12) **EUROPEAN PATENT APPLICATION**

(43) Date of publication:
**13.08.2003 Bulletin 2003/33**

(51) Int Cl.[7]: **H04J 14/02**

(21) Application number: **02026604.5**

(22) Date of filing: **28.11.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **30.01.2002 JP 2002021234**

(71) Applicant: **KDDI Submarine Cable Systems Inc.**
**Tokyo (JP)**

(72) Inventors:
• **Taga, Hidenori,**
**KDDI Submarine Cable Systems Inc.**
**Tokyo (JP)**
• **Yamauchi, Hiroshi,**
**KDDI Submarine Cable Systems**
**Tokyo (JP)**
• **Shibano, Eiichi,**
**KDDI Submarine Cable Systems Inc.**
**Tokyo (JP)**
• **Goto, Koji, KDDI Submarine Cable Systems Inc.**
**Tokyo (JP)**

(74) Representative: **Schaumburg, Thoenes & Thurn**
**Postfach 86 07 48**
**81634 München (DE)**

(54) **Transmission capacity expanding method and optical transmission terminal**

(57)     A method to expand a transmission capacity in a WDM optical transmission system including a first optical transmission unit to output to an optical transmission line a plurality of existing signal lights having existing wavelengths different from each other. The method comprises steps of providing a second optical transmission unit to output a plurality of additional signal lights having additional wavelengths different from each other and the existing wavelengths at an error correction ability higher than that of the existing signal lights, and controlling at least one of optical powers of the additional signal light and existing signal light so that the optical power of the additional signal light becomes lower than that of the existing signal light on the optical transmission line.

Fig. 1

EP 1 335 515 A2

**Description**

FIELD OF THE INVENTION

This invention relates to a method for increasing transmission capacity of WDM optical transmission systems and relates to an optical transmission terminal.

BACKGROUND OF THE INVENTION

In an optical fiber transmission system, it is possible to transmit a large amount of data by utilizing a wavelength division multiplexing (WDM) system. However, when a demand for data transmission through an optical transmission system is lower than system's primary capacity at the beginning of operation, a method generally applied is to use fewer wavelengths at first and increase the number of wavelengths according to a rise of demand for data transmission. For instance, a system designed for 16 wavelengths starts its operation using only 4 wavelengths, then gradually increases the number of wavelengths by 2 to 4 wavelengths at a time according to the demand, and finally operates using all the 16 wavelengths.

Generally, when a number of wavelengths to be increased are within a predetermined range, an optical transmitter is provided per additional wavelength and its output is connected to an existing wavelength multiplex apparatus. However, if the wavelength multiplex apparatus is not programmed to increase a number of wavelengths, sometimes it is inevitable to change a whole terminal station unit. This causes increase in the installation cost.

Sometimes, it also happens that even the maximum number of wavelengths in its design stage fails to cover its demand because the demand exceeds the original estimate. In such case, it is required to introduce new techniques (such as an error correction technique having advanced correction capability) that were not practically used at that time the system in question was designed and to use the system with a number of wavelengths larger than the originally designed number. This means to change a whole transmission terminal unit. In the case that the system designed for 16 wavelengths will be used for 32 wavelengths, the whole system for 16 wavelengths that was already planted is removed so as to install a new unit for 32 wavelengths. This procedure causes an increase of production cost.

When an improvement in the wavelength multiplexing technique leads to practically expand a transmission band of an optical fiber transmission line, a similar problem can be happened. In such technical improvements, one is that a wavelength band shorter or longer than those used when a system was designed becomes usable for signal transmission and the other is that wavelength density of wavelength-division-multiplexing can be higher than that at system design.

SUMMARY OF THE INVENTION

It is therefore an object of the present invention to provide a method to expand transmission capacity at low costs utilizing an existing unit and to provide an optical transmission terminal whose transmission capacity is increased by the method.

A transmission capacity expanding method according to the present invention is a method to expand transmission capacity in a WDM optical transmission system including a first optical transmission unit to output to an optical transmission line a plurality of existing signal lights having existing wavelengths different from each other, the method comprising a step to provide a second optical transmission unit to output, toward a plurality of additional signal lights having additional wavelengths different from each other and the existing wavelengths at an error correction ability higher than that of the existing signal lights and a step of controlling at least one of the optical powers of the additional signal lights and existing signal lights so that the optical power of the additional signal lights becomes lower than that of the existing signal lights on the optical transmission line.

Owing to the above method, signal wavelengths can be added making full use of an existing unit. This makes it possible to increase transmission capacity at low costs.

An optical transmission terminal according to the present invention comprises an optical transmission unit to output a first WDM signal light composed of a plurality of existing signal lights having existing wavelengths different from each other at a first error correction ability, a plurality of optical transmitters to respectively output additional signal lights having additional wavelengths different from each other and the existing wavelengths at a second error correction ability higher than the first error correction ability, and an optical multiplex apparatus to multiplex the first WDM signal light and the plurality of additional signal lights and output onto an optical transmission line, wherein optical power of the additional signal light is controlled so that the optical power of the additional signal lights become lower than that of the existing signal light on the optical transmission line.

This configuration contributes to provide an optical transmission terminal of a large transmission capacity at low costs. It is also possible to gradually increase the transmission capacity.

BRIEF DESCRIPTION OF THE DRAWING

The above and other objects, features and advantages of the present invention will be apparent from the following detailed description of the preferred embodiments of the invention in conjunction with the accompanying drawings, in which:

Fig. 1 shows a schematic block diagram of a first embodiment of the invention;

Fig. 2 shows wavelength maps before and after transmission capacity is increased;

Fig. 3 shows another wavelength maps before and after the transmission capacity is increased;

Fig. 4 shows a schematic block diagram of a second embodiment of the present invention;

Fig. 5 shows a schematic block diagram of a third embodiment of the present invention;

Fig. 6 shows a schematic block diagram of a fourth embodiment of the present invention; and

Fig. 7 shows a schematic block diagram of a fifth embodiment of the present invention.

DETAILED DESCRIPTION

Embodiments of the invention are explained below in detail with reference to the drawings.

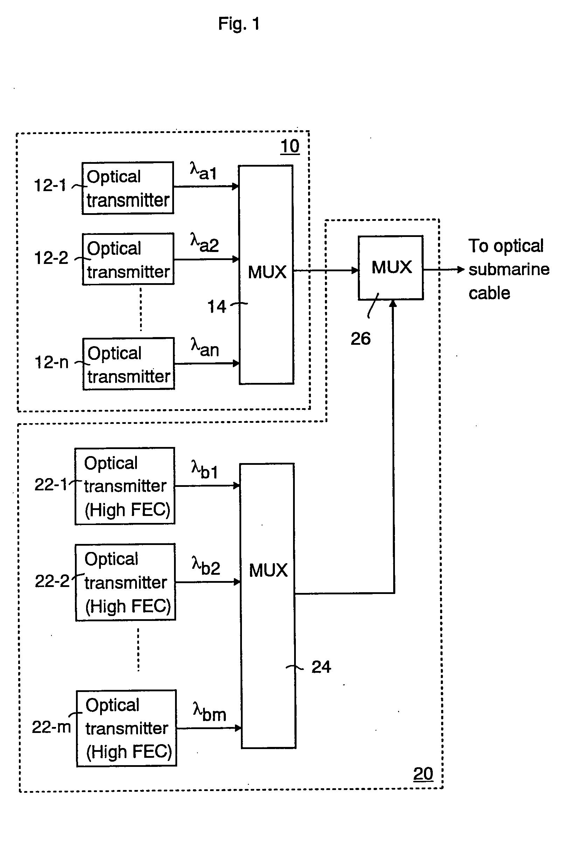

Fig. 1 shows a schematic block diagram of a transmission terminal after a number of wavelengths is increased. Reference numeral 10 denotes an existing unit and reference numeral 20 denotes an additional unit added to expand transmission capacity (to increase a number of wavelengths). As shown in Fig. 1, the additional unit 20 is newly connected between the existing unit 10 and an optical submarine cable (which is not shown in the figure).

In the existing unit 10, optical transmitters 12-1～12-n respectively output each one of wavelengths $\lambda_{a1}～\lambda_{an}$ which are different from each other. An optical multiplex apparatus 14 multiplexes all the signal lights from the optical transmitters 12-1～12-n. Before the increase of transmission capacity, output light from the optical multiplex apparatus 14 used to be applied to an optical submarine cable which is not illustrated.

In the additional unit 20, optical transmitters 22-1～22-m respectively output each one of wavelengths of $\lambda_{b1}～\lambda_{bm}$ which are different from each other. Needless to say, the additional wavelengths $\lambda_{b1}～\lambda_{bm}$ are different from the existing wavelengths $\lambda_{a1}～\lambda_{an}$. An optical multiplex apparatus 24 multiplexes all the signal lights from the optical transmitters 22-1～22-m. An optical multiplex apparatus 26 multiplexes the output lights from the optical multiplex apparatuses 14, 24 and applies the multiplexed light to the optical submarine cable.

The optical transmitters 22-1～22-m comprises an error correction or FEC (a forward error correction) ability higher than that of the optical transmitters 12-1～12-n in the existing unit 10. Also, optical power of the output signals from the optical transmitters 22-1～22-m is set to be lower than that of the output signals from the optical transmitter 12-1～12-n in the existing unit 10. That is, the optical power of output signal from each of the optical transmitters 22-1～22-m is set so that the optical power of each signal light of the additional wavelengths $\lambda_{b1}～\lambda_{bm}$ becomes lower than that of each signal light of the existing wavelengths $\lambda_{a1}～\lambda_{an}$.

Even though the optical power is set to become low, each signal light of the additional unit 20 can obtain transmission characteristics identical to those of each signal light of the existing unit 10 by improving its error correction ability. Furthermore, by setting the optical power of each signal light in the additional unit 20 to be lower than that of each signal light in the existing unit 10, the transmission characteristics of each signal light in the exiting unit 10 can be maintained identical to the condition before the additional unit 20 is added.

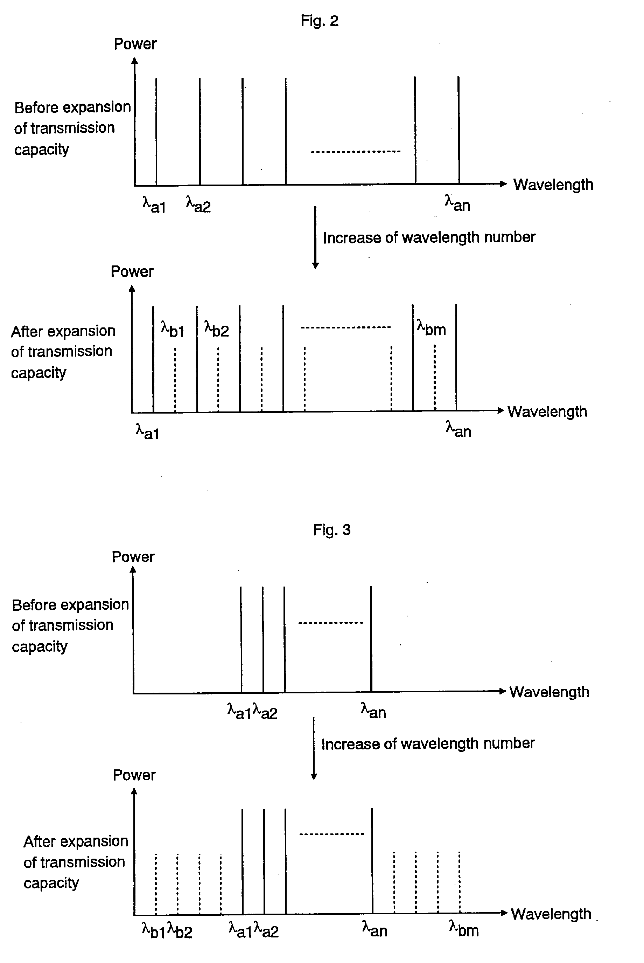

Figs. 2 and 3 show wavelength map examples before and after the transmission capacity is increased. Fig. 2 shows an example in which the additional wavelengths $\lambda_{b1}～\lambda_{bm}$ are disposed between the existing wavelengths $\lambda_{a1}～\lambda_{an}$, and Fig. 3 shows an example in which the additional wavelengths $\lambda_{b1}～\lambda_{bm}$ are disposed on both side of the existing wavelengths $\lambda_{a1}～\lambda_{an}$. The existing wavelengths $\lambda_{a1}～\lambda_{an}$ are shown in solid lines while the additional wavelengths $\lambda_{b1}～\lambda_{bm}$ are shown in broken lines. In the example shown in Fig. 3, gain of the additional wavelengths $\lambda_{b1}～\lambda_{bm}$ in the optical fiber transmission line becomes lower than that of the existing wavelengths $\lambda_{a1}～\lambda_{an}$ and thus an SNR of the additional wavelengths $\lambda_{b1}～\lambda_{bm}$ becomes lower than that of the existing wavelengths $\lambda_{a1}～\lambda_{an}$, and therefore, in the wavelength disposition shown in Fig. 3, a reducing rate of the optical power of the additional wavelengths $\lambda_{b1}～\lambda_{bm}$ relative to that of the existing wavelengths $\lambda_{a1}～\lambda_{an}$ can be set lower compared to the case in the disposition shown in Fig. 2.

The error correction ability (FEC gain) of each signal light in the existing unit 10 is expressed $G_1$ (dB) and the error correction ability (FEC gain) of each signal light in the additional unit 20 is expressed $G_2$ (dB). Further, a receiving SNR when the existing unit 10 alone is disposed is expressed $R_0$ (dB), a receiving SNR of the existing wavelengths after the transmission capacity is increased is expressed $R_1$ (dB), and a receiving SNR of the additional wavelengths is expressed $R_2$ (dB).

On the assumption that a multiplex power ratio in the optical multiplex apparatus 26 is one to one, the difference of output power between the optical multiplex apparatuses 14 and 24 becomes approximately $(R_1-R_2)$ (dB). According to the difference of the error correction abilities between the existing wavelengths and the additional wavelengths and their receiving SNRs, the number m of the wavelengths which may be added are determined. That is, the wavelengths can be increased by the number m of wavelengths to satisfy all the following equations.

$$(G_2-G_1) \text{ (dB)} \geq 10 \log ((n+m)/n)$$

$$G_1 + R_1 = G_2 + R_2$$

$R_0 - R_1 \leq$ Transmission margin of the existing wavelengths before the expansion of the transmission capacity

By setting the output optical power of the optical transmitters 22-1~22-m identical to that of the optical transmitters 12-1~12-n and controlling the multiplex power ratio in the optical multiplex apparatus 26, it is possible to practically make the optical signal power of the additional wavelengths lower than that of the existing wavelengths. For instance, the multiplex ratio of the optical multiplex apparatus 26 is controlled so that the optical power of the existing wavelength becomes not less than 0 dB and not more than $(R_1 - R_2)$ (dB) compared to that of the additional wavelength. This configuration is also included in the technical scope and protected range of the present invention.

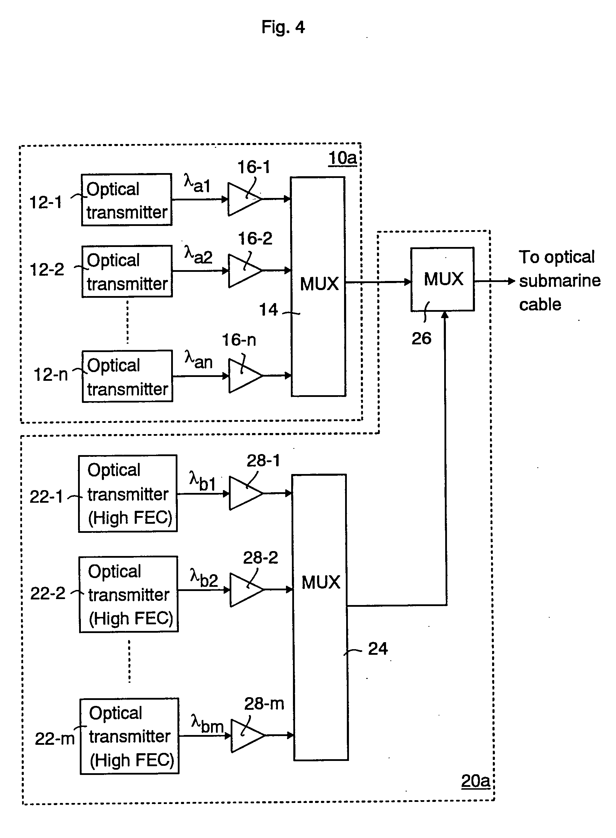

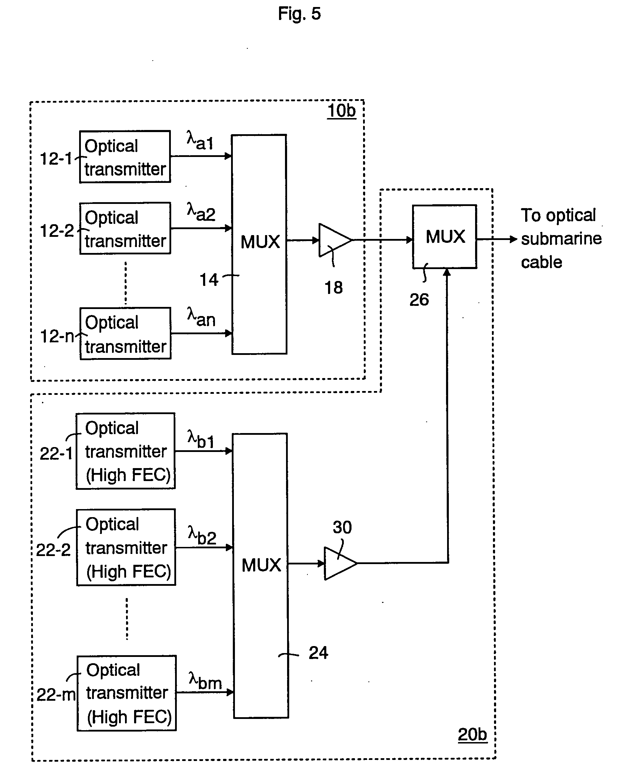

Figs. 4 and 5 show configuration examples of controllers to control the optical power of the existing wavelengths $\lambda_{a1} \sim \lambda_{an}$ and the additional wavelengths $\lambda_{b1} \sim \lambda_{bm}$. The elements identical to those in Fig. 1 are labeled with common reference numerals.

In the example shown in Fig. 4, optical amplifier 16-1~16-n is disposed between each output of the optical transmitters 12-1~12-n and each corresponding input of a multiplex apparatus 14 in an existing unit 10a, and optical amplifier 28-1~28-m is disposed between each output of the optical transmitters 22-1~22-m and each corresponding input of a multiplex apparatus 24 in an additional unit 20a. Optical amplifiers whose output power is smaller and optical SNR is higher compared to those of the optical amplifiers 16-1~16-n are used for the optical amplifiers 28-1~28-m.

In the example shown in Fig. 5, an optical amplifier 18 connects to an output of a multiplex apparatus 14 in an existing unit 10b, and an optical amplifier 30 connects to an output of a multiplex apparatus 24 in an additional unit 20b. An optical amplifier whose output power is smaller and optical SNR is higher compared to those of the optical amplifier 18 is used for the optical amplifier 30.

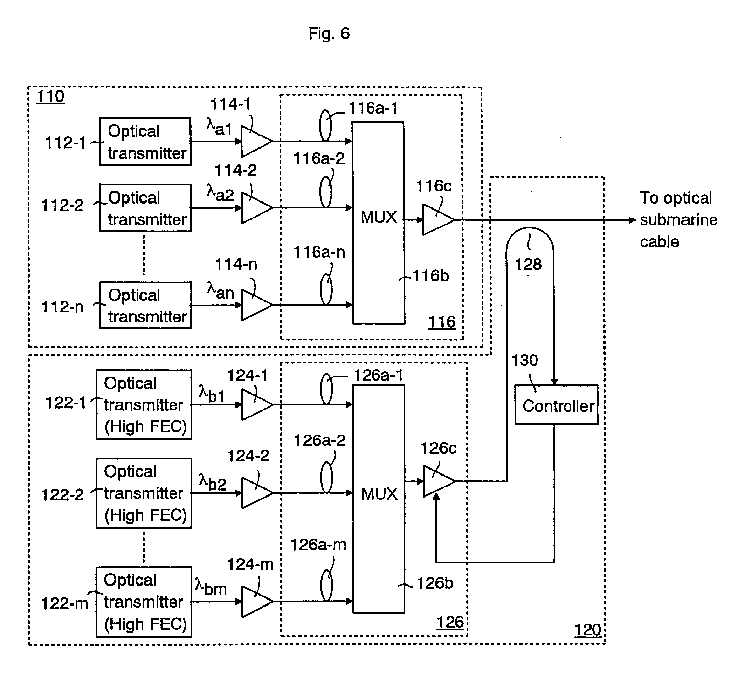

Fig. 6 shows a schematic block diagram of an embodiment applied to a system wherein dispersion equalizing fibers are installed. In this embodiment, the optical powers of the additional wavelengths are feedback-controlled so that the optical powers of the additional wavelengths become smaller than those of the existing wavelengths by a predetermined amount.

Reference numeral 110 denotes an existing unit, and reference numeral 120 denotes an additional unit for expansion of the transmission capacity (or increase in the number of wavelengths). Similarly to the embodiment shown in Fig. 1, the additional unit 120 is newly provided and connected between the existing unit 110 and an optical submarine cable (not illustrated) as shown in Fig. 6.

In the existing unit 110, the optical transmitters 112-1~112-n respectively output each one of the wavelengths $\lambda_{a1} \sim \lambda_{an}$ that are different from each other. The output signal lights from the optical transmitters 112-1~112-n are optically amplified by optical amplifiers 114-1~114-n respectively and applied to respective input ports of an optical multiplex apparatus 116. The optical multiplex apparatus 116 multiplexes the output lights from the optical amplifiers 114-1~114-n. Before the expansion of the transmission capacity, the output lights from the optical multiplex apparatus 116 are applied to the optical submarine cable (not illustrated).

The optical multiplex apparatus 116 comprises dispersion equalizing fibers 116a-1~116a-n to apply predetermined chromatic dispersions to the output lights from the optical amplifiers 114-1~114-n in advance, an optical multiplexer 116b to multiplex the output lights from the respective dispersion equalizing fibers 116a-1~116a-n, and an optical amplifier 116c to amplify an output light from the optical multiplexer 116b. That is, each of the respective dispersion equalizing fibers 116a-1~116a-n applies a predetermined chromatic dispersion to the output lights from corresponding one of the optical amplifiers 114-1~114-n, and the optical multiplexer 116b multiplexes the output signal lights from the dispersion equalizing fibers 116a-1~116a-n. The optical amplifier 116c optically amplifies the output light from the optical multiplexer 116b. The output from the optical amplifier 116c becomes an output from the optical multiplex apparatus 116.

In the additional unit 120, the optical transmitters 122-1~122-m output signal lights of wavelengths $\lambda_{b1} \sim \lambda_{bn}$ which are different from each other. Similarly to the embodiments shown in Figs. 1, 4 and 5, the additional wavelengths $\lambda_{b1} \sim \lambda_{bn}$ are also different from the existing wavelengths $\lambda_{a1} \sim \lambda_{an}$. The output signal lights from the optical transmitters 122-1~122-m are optically amplified by optical amplifiers 124-1~124-m respectively and applied to respective input ports of an optical multiplex apparatus 126. The optical multiplex apparatus 126 multiplexes the output lights from the optical amplifiers 124-1~124-m.

The optical multiplex apparatus 126, similarly to the optical multiplex apparatus 116, comprises dispersion equalizing fibers 126a-1~126a-m to apply predetermined chromatic dispersions to the output lights from the optical amplifiers 124-1~124-m in advance respectively, an optical multiplexer 126b to multiplex output lights from the dispersion equalizing fibers 126a-1~126a-n, and an optical amplifier 126c to amplify the output light from the optical multiplexer 126b. Here, gain of the optical amplifier 126c can be controlled from the outside.

Each of the dispersion equalizing fibers 126a-1~126a-m applies a predetermined chromatic dispersion to the output light from corresponding one of the optical amplifiers 124-1~124-m, and the optical multiplexer 126b multiplexes the output signal lights from the dispersion equalizing fibers 126a-1~126a-m. The optical amplifier 126c optically amplifies an output light from the optical multiplexer 126b. The output from the optical amplifier 126c becomes an output from the optical multiplex apparatus 126.

The additional unit 120 further comprises an optical coupler 128 to couple the output lights from the optical multiplex apparatuses 116, 126, and a controller 130 to control the gain of optical amplifier 126c in the optical multiplex apparatus 126 according to a portion of the output light of the optical multiplex apparatus 116 and a portion of the output light of the optical multiplex apparatus 126 output from the optical coupler 128. The optical coupler 128 applies most of the output light from the optical multiplex apparatus 116 and most of the output light from the optical multiplex apparatus 116 to the submarine optical cable which is not illustrated and applies to the rest of the output light from the optical multiplex apparatus 116 and the rest of the output light from the optical multiplex apparatus 126 to a controller 130.

Similarly to the embodiments shown in Figs. 1, 4 and 5, the optical transmitters 122-1~122-m comprise an error correction or FEC (forward error correction) ability higher than that of the optical transmitters 112-1~112-n in the existing unit 110. In the output stages of the optical amplifiers 114-1~114-n and the optical amplifier 124-1~124-m, the optical power of each additional wavelength $\lambda_{b1}$~$\lambda_{bn}$ and that of the existing wavelength $\lambda_{a1}$~$\lambda_{an}$ can be equal. This is because, in the embodiment shown in Fig. 6, the controller 130 feedback-controls the optical amplifier 126c so that the optical power of each of the additional wavelengths $\lambda_{b1}$~$\lambda_{bn}$ becomes lower than that of the existing wavelengths $\lambda_{a1}$~$\lambda_{an}$ by ($R_1$-$R_2$) (dB).

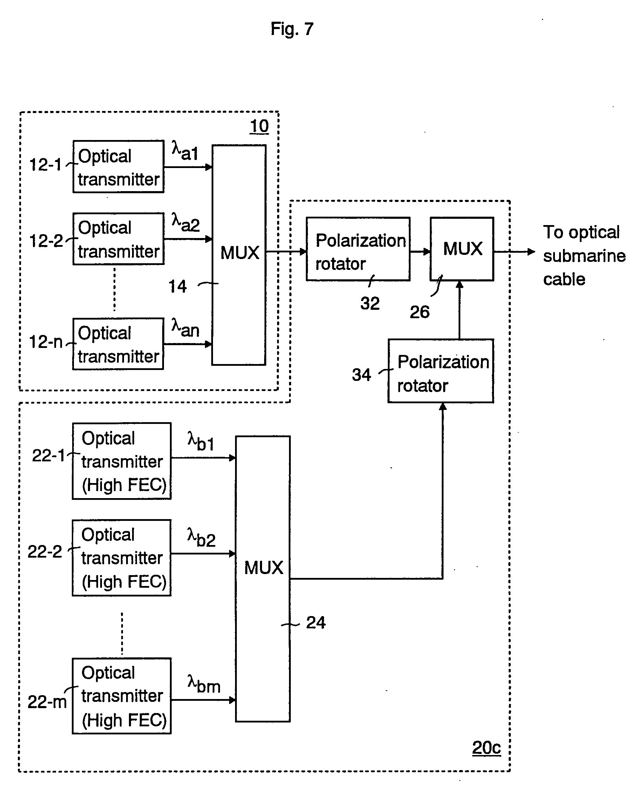

Although some of the latest optical transmission units maintain a plane of polarization, an existing optical transmission unit often does not maintain the plane of polarization. When the existing unit 10 is not a polarization maintaining type and an optical transmission unit to be added is a polarization maintaining type, there is a possibility that polarization states of adjacent wavelengths coincide with each other if such a wavelength disposition shown in Fig. 2 is utilized. That is, although a polarization state of a signal light whose plane of polarization is preserved is stable, a polarization state of a signal light whose plane of polarization is not preserved is likely to vary very slowly. Under such a circumstances, polarization states of adjacent wavelengths occasionally coincide with each other for a long time causing deterioration of transmission characteristics. To prevent the phenomenon that the polarization states of adjacent wavelengths coincide with each other for a long time, polarization rotators 32, 34 to slowly rotate the polarization at a low cycle (e.g. several ten Hz or less) are disposed both inputs or one of inputs of the optical multiplex apparatus 26 as an additional unit 20c as shown in Fig. 7. When the polarization rotators 32 and 34 are disposed in both of the existing unit and additional unit, it is necessary to set each speed of rotation to a different value. In Fig. 7, elements identical to those in Fig. 1 are labeled with the identical reference numerals.

As readily understandable from the aforementioned explanation, according to the invention, it is possible to increase transmission capacity easily and inexpensively. Owing to this configuration, it is possible to meet a demand for expansion of transmission capacity at low costs.

While the invention has been described with reference to the specific embodiment, it will be apparent to those skilled in the art that various changes and modifications can be made to the specific embodiment without departing from the spirit and scope of the invention as defined in the claims.

**Claims**

1. A method to expand a transmission capacity in a WDM optical transmission system including a first optical transmission unit to output to an optical transmission line a plurality of existing signal lights having existing wavelengths different from each other, the method comprising steps of:

   providing a second optical transmission unit to output a plurality of additional signal lights having additional wavelengths different from each other and the existing wavelengths at an error correction ability higher than that of the existing signal lights; and
   controlling at least one of optical powers of the additional signal light and existing signal light so that the optical power of the additional signal light becomes lower than that of the existing signal light on the optical transmission line.

2. The method of claim 1 wherein the controlling step controls the optical power of the additional signal light so that the optical power of the additional signal light becomes lower than that of the existing signal light on the optical transmission line.

3. The method of claim 1 or 2 wherein the first optical transmission unit comprises a first optical multiplex apparatus to wavelength-multiplex and output the plurality of existing lights and the second optical transmission unit comprises a second optical multiplex apparatus to multiplex the output signal lights from the first optical multiplex apparatus and the plurality of additional signal lights.

4. The method of claim 3 wherein the second optical multiplex apparatus comprises a first optical multiplexer to wavelength-multiplex and then output the plurality of additional signal lights and a second optical multiplexer to multiplex the output signal lights from the first optical multiplex apparatus and the output signal lights from the first optical multiplexer.

5. An optical transmission terminal comprising:

an optical transmission unit to output a first WDM signal light composed of a plurality of existing signal lights having existing wavelengths different from each other at a first error correction ability; a plurality of optical transmitters to respectively output additional signal lights having additional wavelengths different from each other and the existing wavelengths at a second error correction ability higher than that of the first error correction ability; and an optical multiplex apparatus to multiplex the first WDM signal light and the plurality of additional signal lights and output onto an optical transmission line;

wherein optical power of the additional signal lights is controlled so that the optical power of the additional signal lights becomes lower than that of the existing signal lights on the optical transmission line.

6. The optical transmission terminal of claim 5 wherein the optical multiplex apparatus comprises a first optical multiplexer to wavelength-multiplex and then output the plurality of additional signal lights from the plurality of optical transmitters and a second optical multiplexer to multiplex the first WDM signal light and the output signal lights from the first optical multiplexer.

7. The optical transmission terminal of claim 5 or 6 wherein the second optical multiplexer multiplexes the first WDM signal light and the output signal lights from the first optical multiplexer so that the optical power of the additional signal light becomes lower than that of the existing signal light.

8. The optical transmission terminal of claim 6 or 7 wherein the first optical multiplexer comprises a plurality of optical amplifiers to optically amplify the plurality of additional signal lights from the plurality of optical transmitters respectively, gain of the plurality of optical amplifiers being controlled so that the optical power of the additional signal lights becomes lower than that of the existing signal lights on the optical transmission line.

9. The optical transmission terminal of claim 6 or 7 wherein the first optical multiplexer comprises an optical amplifier to optically amplify the multiplexed light of the plurality of additional signal lights from the plurality of optical transmitters, gain of the optical amplifier being controlled so that the optical power of the additional signal light becomes lower than that of the existing signal light on the optical transmission line.

10. The optical transmission terminal of claim 9 further comprising a controller to monitor both optical powers of the plurality of existing signal lights and the plurality of additional signal lights on the optical transmission line and control the gain of the optical amplifier according to the monitored result so that the optical power of the additional signal lights becomes lower than that of the existing signal lights on the optical transmission line.

Fig. 1

Fig. 2

Power

Before expansion of transmission capacity

Wavelength

$\lambda_{a1}$ $\lambda_{a2}$ $\lambda_{an}$

Increase of wavelength number

Power

After expansion of transmission capacity

$\lambda_{b1}$ $\lambda_{b2}$ $\lambda_{bm}$

Wavelength

$\lambda_{a1}$ $\lambda_{an}$

Fig. 3

Power

Before expansion of transmission capacity

Wavelength

$\lambda_{a1}\lambda_{a2}$ $\lambda_{an}$

Increase of wavelength number

Power

After expansion of transmission capacity

Wavelength

$\lambda_{b1}\lambda_{b2}$ $\lambda_{a1}\lambda_{a2}$ $\lambda_{an}$ $\lambda_{bm}$

**Fig. 4**

## Fig. 5

Fig. 6

Fig. 7